# EUROPÄISCHE PATENTSCHRIFT

(11) **EP 1 167 820 B1**
(45) Veröffentlichungstag und Bekanntmachung des Hinweises auf die Patenterteilung: **09.11.2005**
(21) Anmeldenummer: 01112994.7
(22) Anmeldetag: 08.06.2001
(51) Int. Cl.: B64G 1/22, F16H 25/20

(54) **Linearbetätigungsvorrichtung, insbesondere für Solargenerator-Entfaltsysteme für Raumfahrzeuge**
Linear actuator especially for solar panel deployment systems for spacecraft
Actionneur linéaire en particulier pour panneaux solaires déployables pour engin spatial

(30) Priorität: 29.06.2000 DE 10043631
(43) Veröffentlichungstag der Anmeldung: 02.01.2002
(73) Patentinhaber: EADS Astrium GmbH, 81663 München (DE)
(72) Erfinder: Roth, Martin, 82024 Taufkirchen (DE); Stielner, Leonhard, 83737 Irschenberg (DE); Stöckle, Axel, 88090 Immenstaad (DE)
(74) Vertreter: Ulrich, Thomas

(56) Entgegenhaltungen:
- EP-A- 0 386 771
- US-A- 3 214 991
- US-A- 3 824 905
- US-A- 4 501 981
- US-A- 5 231 888
- US-A- 5 731 640
- US-A- 5 865 272
- US-A- 6 007 043

## Beschreibung

Die vorliegende Erfindung betrifft eine Linearbetätigungsvorrichtung mit einem als Mutter ausgebildeten Mittel zur Umsetzung einer Rotationsbewegung in eine Translationsbewegung, einem Antriebsorgan und einer mit der Mutter zusammenwirkenden Spindel, wobei die Mutter mit der Spindel drehbar verbunden ist, nach dem Oberbegriff des Patentanspruchs 1.

Aus der US 5,865,272 A ist ein Linearbetätiger mit einer sich axial relativ zum Betätigergehäuse bewegenden Spindel bekannt. Die Spindel kann auf zwei Weisen angetrieben werden, nämlich mittels eines Antriebsmotors, der über ein Getriebe die Spindel unmittelbar in Drehung versetzt, oder mittels einer auf die Spindel in deren Axialrichtung wirkenden Druckfeder. Erfolgt der Antrieb über den Antriebsmotor, so wird die Spindel über das Getriebe unmittelbar angetrieben und gleichzeitig wird die die Spindel umgebende Mutter mit einer von der Spindeldrehzahl verschiedenen Drehzahl über ein Getriebe vom Antriebsmotor angetrieben. Folglich bewegt sich die Spindel mit einer der Differenzgeschwindigkeit zwischen der Spindeldrehzahl und der Drehzahl der Mutter entsprechenden Axialgeschwindigkeit. Im zweiten Fall ist die Mutter vom Antriebsstrang entkoppelt und die Feder drückt die Spindel in Axialrichtung durch die Mutter, wobei sich die Spindel mit wesentlich höherer Axialgeschwindigkeit bewegt, welche bedingt ist durch die Steigung der Gewindepaarung zwischen Spindel und Mutter.

Eine andere Linearbetätigungsvorrichtung ist aus der EP 0 603 067 bekannt. Diese Linearbetätigungsvorrichtung aus dem Stand der Technik ist insbesondere für den Einsatz in einem Raumfahrzeug vorgesehen, wobei die Mutter als Gewinderollenmechanismus ausgebildet ist. Die Spindel ist mit einem Antriebsorgan drehfest verbunden.

Als Alternative zu dem obengenannten Gewinderollenmechanismus ist aus der DE 42 08 126 eine Kugelmutter bekannt, die ebenfalls mit einer Spindel zur Umsetzung einer Rotationsbewegung in eine Translationsbewegung zusammenwirkt.

Beim Stand der Technik nach der EP 0 603 067 bleibt stets die Spindel des Linearantriebes mit dem Antriebsorgan verbunden. Mit der Mutter verbundene Elemente können relativ zur Spindel translatorisch bewegt oder im Extremfall sogar von der Spindel gelöst werden. Dabei besteht jedoch die Gefahr, dass bei größeren, translatorisch zu bewegenden oder evtl. mit der Spindel vorübergehend zu verbindenden Elementen eine entsprechend große Spindel benötigt wird, die beispielsweise nach einem Lösen der Verbindung zwischen der Mutter und der Spindel als relativ großes, störendes Element an dem Antriebsorgan und möglichen weiteren, mit dem Antriebsorgan verbundenen Komponenten, verbleibt. Für das Beispiel eines Entfaltens eines Solargenerators an einem Raumfahrzeug würde dies bedeuten, dass nach dem Entfalten des Solargenerators noch eine relativ lange Spindel von der Oberfläche des Raumfahrzeugs absteht, die die Bewegungen des Solargenerators behindern oder gär zu einer Beschädigung des Solargenerators führen kann.

Gerade für den Fall eines Entfaltsystems für Solargeneratoren sind aus dem Stand der Technik beispielsweise aus der DE 196 49 739 unterschiedliche Bauweisen bekannt, die jedoch gewisse Nachteile aufweisen. Bei einer pyrotechnischen Auslösung besteht das Problem, dass ein relativ großer Schock auf die Solargeneratoreinrichtung bzw. die sie tragenden Strukturen wirkt, was z.B. bei einer Anwendung in Raumfahrzeugen erhebliche Störungen verursacht. Außerdem besteht hierbei die Gefahr umherfliegender Partikel, die zu einer Schädigung der Solargeneratoreinrichtung oder anderer Einrichtungen führen kann. DE 196 49 739 offenbart auch nicht-pyrotechnische Auslösevorrichtungen, die jedoch entweder ebenfalls die Gefahr umherfliegender Partikel in sich bergen oder bei denen wie bei der beanspruchten Lehre der DE 196 49 739 die Gefahr eines Verklemmens und damit Nicht-Auslösens nicht ausgeschlossen werden kann.

Aufgabe der vorliegenden Erfindung ist es daher, eine Linearbetätigungsvorrichtung bereitzustellen, die die Nachteile des obengenannten Standes der Technik behebt und, insbesondere bei einer Anwendung in der Raumfahrt, einen zuverlässigen Betrieb ohne Schockwirkung oder umherfliegende Teile ermöglicht.

Diese Aufgabe wird gelöst durch die Merkmale des Patentanspruchs 1. Weitere Gegenstände der vorliegenden Erfindung sind ein Raumfahrzeug sowie ein Solargenerator-Entfaltsystem, die eine erfindungsgemäße Linearbetätigungsvorrichtung aufweisen.

Bei der erfindungsgemäßen Linearbetätigungsvorrichtung ist vorgesehen, dass ein (gegebenenfalls weiteres oder gar mehrere weitere) Antriebsorgan auf den mit der Mutter zusammenwirkenden Bereich der Spindel eine Kraft in Axialrichtung der Spindel ausübt. Somit kann durch die Wirkung dieser Zugkraft oder Druckkraft die Mutter in Rotation versetzt werden und dadurch wiederum eine Translationsbewegung der Spindel bewirkt werden, die im Extremfall bis zu einer Lösung der Spindel von der Mutter führt, wodurch die unter Umständen sehr lange Spindel nicht mehr an dem Antriebsorgan und den damit verbundenen Komponenten verbleibt. In diesem Fall kann das Antriebsorgan als elastisches Element ausgebildet sein.

Um einen spannungsfreien Betrieb der Linearbetätigungsvorrichtung zu garantieren, sind die Spindel und die Mutter verkippbar in Lagerungen gelagert. Damit kann ein gegenseitiger Versatz der Lagerungen von Spindel und Mutter ausgeglichen werden. Hierzu sind die Lagerungen in geeigneter Form auszubilden, beispielsweise als Kugelgelenk oder in anderer geeigneter Weise.

Es kann dabei isbesondere vorgesehen sein, dass die Spindel unter einer Vorspannung dehnbar ausgebildet ist. Hierbei kommen alle Arten von geeigneten Materialien und Bauweisen für die Spindel in betracht, die natürlich an die jeweilige Vorspannung anzupassen sind. So kann die Spindel beispielsweise aus Titan oder Stahl hergestellt sein, um hohe Vorspannungen aufzunehmen, und sie kann massiv ausgebildet oder aus Einzelelementen wie Fasern oder Stangen aufgebaut sein, um eine entsprechend geringere oder höhere Elastizität aufzuweisen. Es sind aber auch andere geeignete Materialien, z.B. nicht-metallische Materialien oder andere Bauweisen möglich.

Andererseits kann alternativ oder zusätzlich vorgesehen werden, dass mindestens ein elastisches Element wie z.B. ein Federelement als Antriebsorgan vorgesehen ist, das auf die Spindel eine Vorspannung, sprich Zugkraft oder auch eine Druckkraft, ausübt. Dieses elastische Element kann dann analog zur vorhergehenden Beschreibung durch die Ausübung der Zugkraft oder Druckkraft auf die Spindel die Mutter in Rotation versetzen.

Es kann aber auch vorgesehen sein, dass in Verbindung zur vorgenannten Lehre ein Antriebsorgan mit der Mutter drehfert verbunden ist. Somit kann durch eine Rotationsbewegung der Mutter, die durch das Antriebsorgan ausgelöst wird, eine Translationsbewegung der Spindel erzeugt werden. Das Antriebsorgan kann beispielweise als Motor oder als Feder ausgebildet sein.

Bevorzugt wird vorgesehen, dass die Mutter über Rollkörper mit der Spindel wirkungsverbunden ist. Damit wird gewährleistet, dass bei einer Rotationsbewegung der Mutter bezüglich der Spindel nur ein Rollwiderstand zu überwinden ist, jedoch kein Gleitwiderstand zwischen der Mutter und der Spindel auftritt. Als Rollkörper können beispielsweise Rollen oder Kugeln vorgesehen werden, wie aus dem obengenannten Stand der Technik bekannt ist.

Um die Mutter vor einer Ausführung der Rotationsbewegung zu arretieren, kann eine Rastvorrichtung vorgesehen werden, wobei die Mutter mit einem ersten Rastorgan drehfest verbunden ist. Dieses Rastorgan kann Teil der Mutter selbst sein, es kann aber auch ein weiteres Element vorgesehen sein, mit dem die Mutter in passender Weise drehfest verbunden ist. Das erste Rastorgan ist so ausgebildet, dass es mit einem komplementären Rastorgan lösbar und drehfest verbunden werden kann. Damit kann garantiert werden, dass in einer Arretierungsstellung der beiden Rastorgane diese eine Rotationsbewegung der Mutter hindern und nach einem Lösen der beiden Rastorgane voneinander die Mutter die gewünschte Rotationsbewegung ausführen kann. Das erste Rastorgan kann hierfür einen Vorsprung oder eine Vertiefung auf seiner Oberfläche aufweisen, wobei das komplementäre Rastorgan dann eine zu dem Vorsprung oder der Vertiefung komplementäre Form aufweist. Diese komplementäre Form muss dabei lediglich so ausgebildet sein, dass sie in effektiver Weise mit dem Vorsprung oder der Vertiefung zusammenwirkt, um ein Verdrehen der Mutter zu verhindern.

Diese Linearbetätigungsvorrichtung kann überall dort eingesetzt werden, wo Gegenstände gegeneinander verfahrbar und insbesondere lösbar miteinander zu verbinden sind, die dann z.B. im Sinne eines Öffnens, Ausfahrens, Ausklappen oder Trennens gelöst werden sollen. Es handelt sich also um eine Vorrichtung, die im eingefahrenen Zustand eine feste Verbindung bietet, welche dann einfach gelöst werden kann, insbesondere auch durch eine ferngesteuerte Aktivierung.

Ein weiterer Gegenstand der vorliegenden Erfindung ist ein Raumfahrzeug, welches eine vorstehend beschriebene Linearbetätigungsvorrichtung aufweist. Hierbei kann das Antriebsorgan beispielsweise mit dem Raumfahrzeug verbunden sein und die Spindel dann mit lösbaren, ausfahrbaren oder entfaltbaren Einrichtungen des Raumfahrzeuges drehfest verbunden sein. Solche Einrichtungen können beispielsweise Solargeneratoreinrichtungen oder Antenneneinrichtungen des Raumfahrzeuges darstellen, sonstige Masten, Landebeine, auszusetzende Lasten, mehrere Raumfahrzeuge (z.B. Stapel von Satelliten) oder auch ein Mutter- oder Tochterraumfahrzeug, das von dem jeweis anderen getrennt werden soll.

Ein weiterer Gegenstand der vorliegenden Erfindung ist ein Solargenerator-Entfaltsystem, das eine vorstehend beschriebene Linearbetätigungsvorrichtung aufweist. Die Linearbetätigungsvorrichtung kann dabei insbesondere als Teil eines Niederhalte- und Auslösesystems zur Entfaltung einer Solargenerator-Einrichtung ausgebildet sein.

In einer speziellen Ausführungsform kann vorgesehen werden, dass die Mutter mit einer Tragstruktur der Solargeneratoreinrichtung verbunden ist und die Spindel mit einem äußersten Paneelenelement der Solargenerator-Einrichtung verbunden ist. Damit wird gewährleistet, dass beim Entfalten der Solargenerator-Einrichtung die Spindel von der Tragstruktur, beispielsweise einem festen Rahmen, einem Fahrzeug, beispielsweise einem Raumfahrzeug, oder ähnlichem, entfernt wird, so dass sie dort nicht mehr stören kann.

Um einen spannungsfreien Betrieb zu garantieren, ist die Spindel in einer ersten Lagerung verkippbar gegen das äußerste Paneeleneelement der Solargeneratoreinrichtung gelagert und die Mutter in einer zweiten Lagerung verkippbar gegen die Tragstruktur gelagert. Damit kann ein möglicher Versatz der Solargenerator-Einrichtung gegen die Tragstruktur auf einfache Weise aufgefangen werden.

Ein spezielles Beispiel der vorliegenden Erfindung wird nachfolgend anhand der Fig. 1 bis 6 erläutert.

Es zeigen:
- Fig. 1: Solargenerator-Entfaltsystem mit einer erfindungsgemäßen Linearbetätigungsvorrichtung,
- Fig. 2: Querschnitt durch den Niederhaltemechanismus für die Spindel des Entfaltsystems nach Fig. 1,
- Fig. 3: schematische Darstellung der Mutter mit Rastvorrichtung,
- Fig. 4: Ansicht der Verbindung einer Feder als Antriebsorgan mit der Mutter,
- Fig. 5: Querschnitt durch eine als Rollenmutter ausgebildete Mutter.
- Fig. 6: Querschnitt durch die Anordnung nach Fig. 1

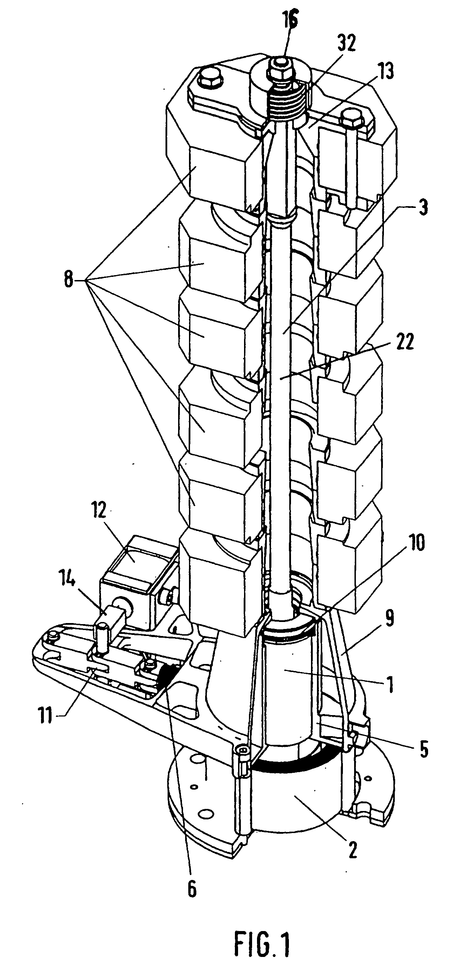

Fig. 1 zeigt eine erfindungsgemäße Linearbetätigungsvorrichtung, die in einem Solargenerator-Entfaltsystem, beispielsweise für ein Raumfahrzeug, verwirklicht wurde. Diese Vorrichtung umfasst eine Mutter 1, die zum lösbaren Festhalten einer Spindel 3 dient. Über diese Spindel 3 wird eine Solargenerator-Einrichtung 8 unter einer Vorspannung zusammengehalten bzw. niedergehalten. In Fig. 1 sind einzelne Panelenelemente der Solargenerator-Einrich-tung 8 ausschnittweise angedeutet. Die Spindel 3 ist über ein entsprechendes Verbindungselement 13, beispielsweise eine Kugelpfanne, mit der Solargenerator-Einrichtung drehfest verbunden. Das Verbindungselement 13 kann nun so ausgelegt werden, dass über die Spindel 3 eine Zugspannung als Vorspannung zum Zusammenhalten bzw. Niederhalten der Solargenerator-Ein-richtung 8 aufgebracht werden kann. Diese Vorspannung kann beispielsweise durch eine weitere Mutter 16 an einem Ende der Spindel 3 aufgebracht werden, wobei die Spindel 3 an ihrem anderen Ende in der Mutter 1 befestigt ist.

Die Vorspannung kann so hoch gewählt werden, dass eine Dehnung der Spindel 3 erfolgt. Dadurch wird die Spindel zu einem Antriebsorgan 22, denn sobald die Mutter 1 es gestattet, versucht die Spindel 3, sich wieder zusammen zu ziehen und versetzt dabei die Mutter 1 in Rotation, wodurch dann wiederum die Spindel 3 aus der Mutter 1 in Form einer Linearbewegung herausbewegt wird. Besteht die Spindel 3 aus einem massiven Material, so erfolgt die Dehnung über ihre gesamte Länge. Die Spindel 3 kann aber auch nur in einem Teilbereich eine bestimmte Elastizität aufweisen, der beispielsweise aus einem elastischeren Material oder durch eine andere Struktur wie z.B. aus Einzelelementen (Fasern, Stangen etc.) gebildet wird.

Alternativ dazu oder zur Unterstützung dieser Vorspannungswirkung durch die Dehnung der Spindel 3 können eine oder mehrere Federn 32 vorgesehen werden, die eine Vorspannung auf die Spindel 3 selbst ausüben, welche dann über die Spindel 3 an die Mutter 1 weitergegeben wird. Somit kann auch durch eine solche Maßnahme die Spindel 3 gegen die Mutter 1 vorgespannt werden. Wiederum wird eine Zugkraft ausgeübt, die die Mutter 1 in Rotation versetzt, sobald es diese erlaubt, wodurch dann wiederum die Spindel 3 aus der Mutter 1 in Form einer Linearbewegung herausbewegt wird. In diesem Fall bildet also die Feder 32 ein Antriebsorgan 32. Es kann aber auch statt einer Feder 32, die eine Zugkraft ausübt, ein geeignetes, elastisches Element vorgesehen werden, das eine Druckkraft auf die Spindel 3 ausübt, und z.B. an dem der Mutter 1 zugewandten Ende der Spindel 3 auf die Spindel 3 einwirkt. Damit würde die Spindel 3 nicht teilweise aus der Mutter 1 herausgezogen, sondern teilweise herausgedrückt, um die Mutter 1 in Rotation zu versetzen und dadurch die Spindel 3 endgültig aus der Mutter 1 herausbewegt wird.

Eine zusätzliche Möglichkeit, ein solches Herausbewegen der Spindel 3 aus der Mutter 1 zu bewirken, besteht in der Vorsehung eines als Drehantriebsorgan ausgebildeten Antriebsorgans 2, das drehfest mit der Mutter 1 verbunden ist. Dieses wird im weiteren noch detaillierter ausgeführt.

Durch eine Rotation der Mutter 1 kann also eine Translationsbewegung der Spindel 3 herbeigeführt werden, die letztlich zu einer Trennung der Spindel 3 von der Mutter 1 führt und damit zu einer Lösung des Verbundes aus Spindel 3 und über Verbindungselement 13 damit verbundenen Solargenerator-Einrichtung 8 von dem durch die Mutter und die mit ihr verbundenen Komponenten gebildeten Niederhaltesystem erzielt werden.

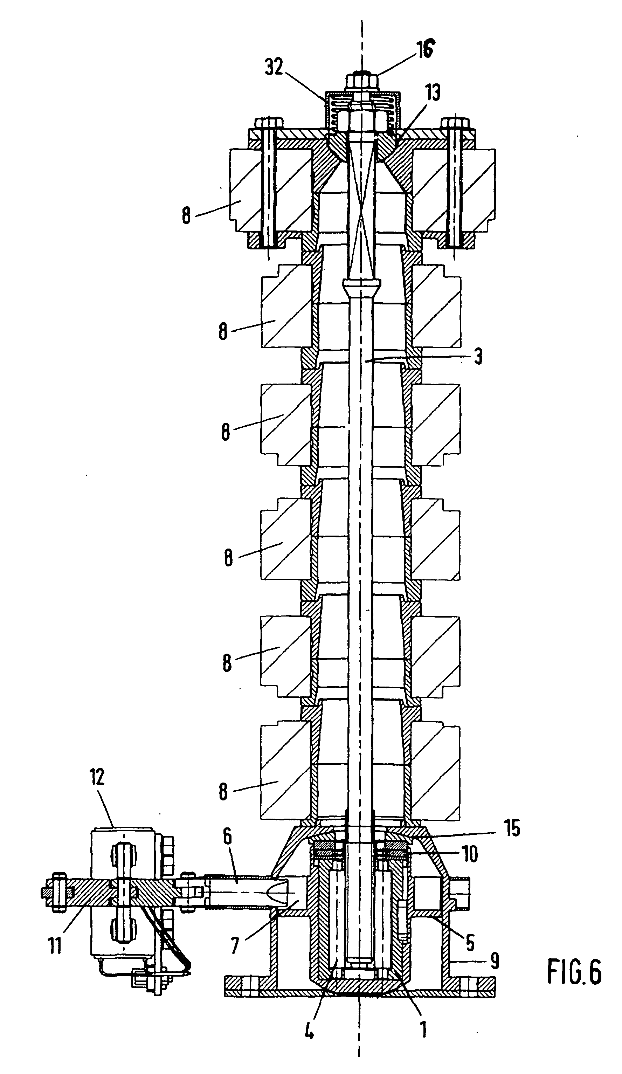

Die Mutter 1 kann beispielsweise, wie in Fig. 5 dargestellt, als Rollenmutter ausgebildet sein, d.h., die Mutter 1 weist Rollen 4 auf, welche wiederum die Wirkverbindung zu der Spindel 3 herstellen, die wie die Rollen 4 ein Gewinde zumindest in einem Teilbereich ihrer Länge aufweist.

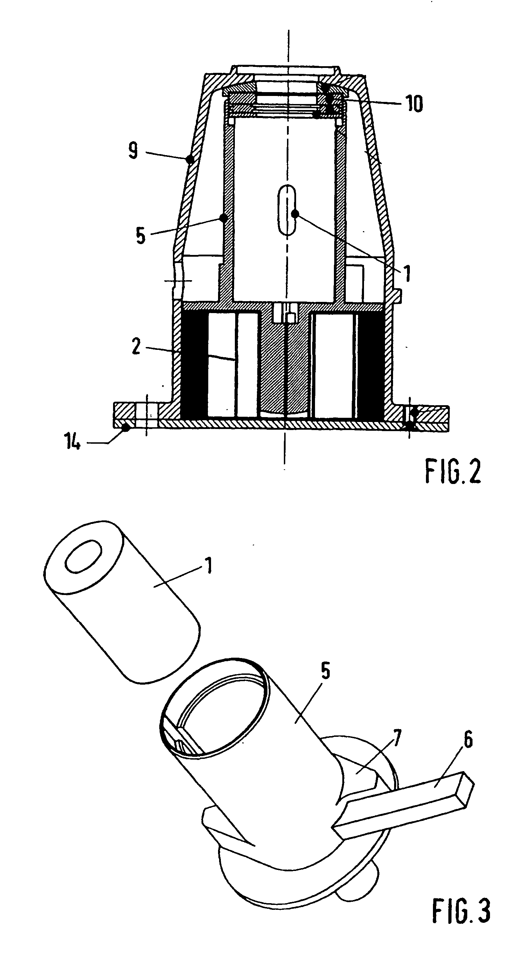

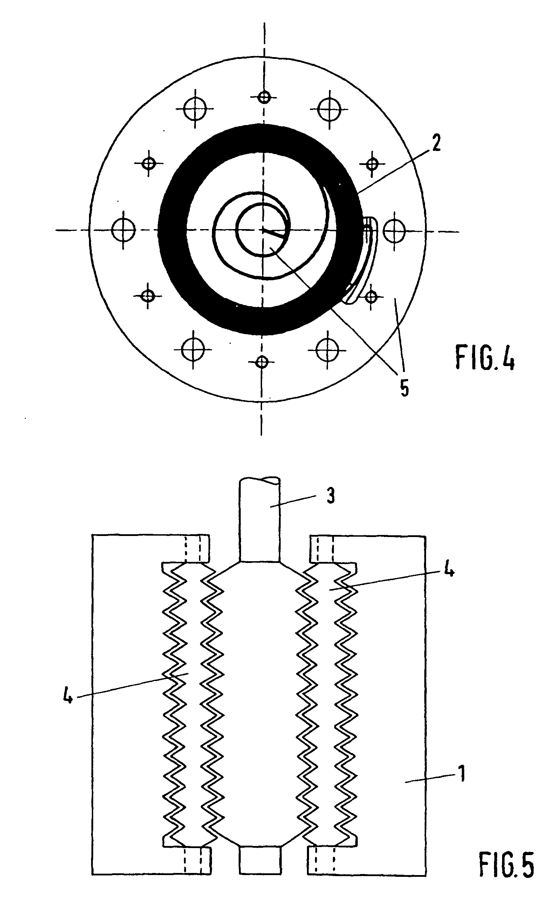

Um eine ungewollte Rotationsbewegung der Mutter 1 zu verhindern, ist als Arretierungsvorrichtung ein Rastorgan 5 vorgesehen, dass in Fig. 3 dargestellt ist. Es handelt sich hierbei im vorliegenden Beispiel um eine Hülse 5, in die die Mutter 1 drehfest eingepasst ist. Die Hülse 5 weist in einem Bereich ihrer Oberfläche einen Vorsprung 7 auf, der eine Blockierung der Drehbewegung des Verbundes aus Hülse 5 und Mutter 1 durch ein zweites Rastorgan 6, beispielsweise eine Stange, einen Bolzen oder Ähnliches ermöglicht. Wie die Fig. 1, 2 und 4 zeigen, kann die Hülse 5 mit einem Antriebsorgan 2, das im vorliegenden Fall als Feder 2 ausgebildet ist, drehfest verbunden sein. Im vorliegendem Beispiel ist hierfür eine Spiralfeder 2 vorgesehen, die sich vor einer Rotationsbewegung der Mutter 1 in einem vorgespannten Zustand befindet und nach einer Lösung der Arretierung, nämlich einer Lösung der Rastorgane 6 und 7 voneinander durch ihre Entspannung eine Rotationsbewegung der Hülse 5 und damit auch der mit der Hülse verbundenen Mutter 1 bewirkt. Die weiteren Antriebsorgane 22, 32 sind, wie bereits ausgeführt, als zusätzliche Antriebsorgane vorgesehen. Aus Gründen der Vereinfachung der Darstellung sind in Figur 1 jedoch alle drei Arten von Antriebsorganen 2, 22, 32 gemeinsam dargestellt.

Um eine sichere Rotationsbewegung zu garantieren, ist, wie Fig. 2 zeigt, die Gesamtheit aus Mutter 1, Hülse 5 und Spiralfeder 2 in einem Gehäuse 9 gelagert, das mit einer Bodenplatte 14 oder beispielsweise direkt mit der Oberfläche eines Raumfahrzeuges verbunden ist. Zur Verringerung der Reibung bei der Rotationsbewegung der Hülse 5 und der Mutter 1 in dem Gehäuse 9 ist zwischen der Hülse 5 und dem Gehäuse 9 im oberen Bereich des Gehäuses ein entsprechendes Lager 10, beispielsweise ein Rollenlager, vorgesehen.

Das Lösen der beiden Rastorgane 6, 7 voneinander kann durch jede geeignete Einrichtung erfolgen. Im Beispiel nach Fig. 1 ist hierfür vorgesehen, dass das Rastorgan 6 als Bolzen ausgebildet ist, der über einen Kniehebel 11 mit einem Schieber 14 verbunden ist, welcher beispielsweise durch einen Aktuator 12 wie einen Motor oder einen Elektromagneten bewegt werden kann. Die Translationsbewegung des Schiebers 14 wird dabei über den Kniehebel 11 in eine Translationsbewegung des Bolzens 6 umgesetzt, der sich bei dieser Bewegung von dem Vorsprung 7 löst und damit die Rotationsbewegung der Hülse 5 sowie der damit verbundenen Mutter 1 freigibt. Als Rastorgan 6 oder Aktuator 12 können aber auch andere geeignete Einrichtungen Verwendung finden, wie z.B. Formgedächtnisiegierungen oder ähnliches.

Fig. 6 zeigt nochmals einen Querschnitt durch die Anordnung nach Fig. 1, die dort bereits beschriebenen Elemente der Linearbetätigungsvorrichtung sind auch in Fig. 6 nochmals aufgeführt. Lediglich auf die Darstellung der Feder 2 wurde verzichtet, diese ist je nach Ausführungsform auch entbehrlich, wie bereits beschrieben. Ein spezielles Detail wird jedoch gerade in der Darstellung nach Fig. 6 besonders deutlich. Es sind dabei zur Lagerung der Spindel im oberen Bereich einerseits sowie zur Lagerung der Mutter 1 und Hülse 5 in dem Gehäuse 9 andererseits Kugelgelenke 13, 15 vorgesehen, die einen Versatz dieser beiden Lagerpunkte gegeneinander, also eine Schrägstellung der Spindel 3, ausgleichen, so dass trotz eines solchen Versatzes keine Spannungen in der Anordnung und insbesondere in der Spindel 3 sowie ihren Lagerungspunkten auftreten. Vielmehr ist die Spindel 3 gegenüber der obersten Solargenerator-Einrichtung 8 in oberen Lagerung 13 ebenso gekippt wie die Hülse 5 mit der Mutter 1 gegen das Gehäuse 9 in der Lagerung 15 im oberen Bereich des Gehäuses 9. Es wird damit ein spannungsfreier Betrieb dieser Anordnung bis zum vollständigen Lösen der Spindel 3 aus der Mutter 1 garantiert.

## Patentansprüche

1. Linearbetätigungsvorrichtung mit
- einem als Mutter (1) ausgebildeten Mittel zur Umsetzung einer Rotationsbewegung in eine Translationsbewegung,
- einem Antriebsorgan (22, 32),
- einer mit der Mutter (1) zusammenwirkenden Spindel (3), wobei die Mutter (1) mit der Spindel (3) drehbar verbunden ist und wobei das Antriebsorgan (22, 32) auf den mit der Mutter (1) zusammenwirkenden Bereich der Spindel (3) eine Kraft ausübt, und
- einem in Axialrichtung der Spindel (3) als Antriebsorgan (22, 32) wirkenden elastischen Element zur Erzeugung einer Zugkraft oder Druckkraft in Axialrichtung der Spindel (3),
- wobei die Mutter (1) über Rollkörper (4) mit der Spindel (3) wirkungsverbunden ist,
- wobei die Mutter (1) mit einem ersten Rastorgan (5) drehfest verbunden ist, welches mit einem komplementären Rastorgan (6) lösbar und drehfest verbindbar ist, und
- wobei die Mutter (1) gegenüber einem Gehäuse (9) drehbar gelagert ist,
**dadurch gekennzeichnet,**
- **dass** die Spindel (3) und die Mutter (1) verkippbar in Lagerungen (13, 15) gelagert sind.

2. Linearbetätigungsvorrichtung nach Anspruch 1,
**dadurch gekennzeichnet**
**dass** die Spindel (3) unter einer Vorspannung dehnbar ausgebildet ist und damit als Antriebsorgan (22) wirkt.

3. Linearbetätigungsvorrichtung nach Anspruch 1 oder 2,
**dadurch gekennzeichnet**
**dass** als Antriebsorgan (32) zumindest ein Federelement (32) vorgesehen ist, das auf die Spindel (3) eine Vorspannung ausübt.

4. Linearbetätigungsvorrichtung nach einem der Ansprüche 1 bis 3,
**dadurch gekennzeichnet**
**dass** die Rollkörper (4) als Rollen oder Kugeln ausgebildet sind.

5. Linearbetätigungsvorrichtung nach einem der Ansprüche 1 bis 4,
**dadurch gekennzeichnet**
**dass** das erste Rastorgan (5) einen Vorsprung oder eine Vertiefung (7) auf seiner Oberfläche aufweist und das komplementäre Rastorgan (6) eine zu dem Vorsprung oder der Vertiefung (7) komplementäre Form aufweist.

6. Raumfahrzeug aufweisend eine Linearbetätigungsvorrichtung nach einem der Ansprüche 1 bis 5.

7. Raumfahrzeug nach Anspruch 6,
**dadurch gekennzeichnet**
**dass** ein Antriebsorgan (2) mit dem Raumfahrzeug verbunden ist und die Spindel (3) mit lösbaren, ausfahrbaren oder entfaltbaren Einrichtungen (8) des Raumfahrzeuges drehfest verbunden ist.

8. Raumfahrzeug nach Anspruch 7,
**dadurch gekennzeichnet**
**dass** die Spindel (3) mit einer Solargeneratoreinrichtung (8) oder einer Antenneneinrichtung verbunden ist.

9. Solargenerator-Entfaltsystem, aufweisend eine Linearbetätigungsvorrichtung mit
- einem als Mutter (1) ausgebildeten Mittel zur Umsetzung einer Rotationsbewegung in eine Translationsbewegung,
- einem Antriebsorgan (22, 32),
- einer mit der Mutter (1) zusammenwirkenden Spindel (3), wobei die Mutter (1) mit der Spindel (3) drehbar verbunden ist und wobei das Antriebsorgan (22, 32) auf den mit der Mutter (1) zusammenwirkenden Bereich der Spindel (3) eine Kraft ausübt, und
- einem in Axialrichtung der Spindel (3) als Antriebsorgan (22, 32) wirkenden elastischen Element (22, 32) zur Erzeugung einer Zugkraft oder Druckkraft in Axialrichtung der Spindel (3),
- wobei die Mutter (1) über Rollkörper (4) mit der Spindel (3) wirkungsverbunden ist,
- wobei die Mutter (1) mit einem ersten Rastorgan (5) drehfest verbunden ist, welches mit einem komplementären Rastorgan (6) lösbar und drehfest verbindbar ist, und
- wobei die Mutter (1) gegenüber einem Gehäuse (9) drehbar gelagert ist,
**dadurch gekennzeichnet,**
- **dass** die Spindel (3) und die Mutter (1) verkippbar in Lagerungen (13, 15) gelagert sind.

10. Solargenerator-Entfaltsystem mit einer Linearbetätigungsvorrichtung nach Anspruch 9,
**dadurch gekennzeichnet,**
**dass** die Spindel (3) unter einer Vorspannung dehnbar ausgebildet ist und damit als Antriebsorgan (22) wirkt.

11. Solargenerator-Entfaltsystem mit einer Linearbetätigungsvorrichtung nach Anspruch 9 oder 10,
**dadurch gekennzeichnet,**
**dass** als Antriebsorgan (32) zumindest ein Federelement (32) vorgesehen ist, das auf die Spindel (3) eine Vorspannung ausübt.

12. Solargenerator-Entfaltsystem mit einer Linearbetätigungsvorrichtung nach einem der Ansprüche 9 bis 11,
**dadurch gekennzeichnet,**
**dass** die Rollkörper (4) als Rollen oder Kugeln ausgebildet sind.

13. Solargenerator-Entfaltsystem mit einer Linearbetätigungsvorrichtung nach einem der Ansprüche 9 bis 12,
**dadurch gekennzeichnet,**
**dass** das erste Rastorgan (5) einen Vorsprung oder eine Vertiefung (7) auf seiner Oberfläche aufweist und das komplementäre Rastorgan (6) eine zu dem Vorsprung oder der Vertiefung (7) komplementäre Form aufweist.

14. Solargenerator-Entfaltsystem mit einer Linearbetätigungsvorrichtung nach einem der Ansprüche 9 bis 13,
**dadurch gekennzeichnet,**
**dass** die Linearbetätigungsvorrichtung als Teil eines Niederhalte- und Auslösesystems zur Entfaltung einer Solargenerator-Einrichtung (8) ausgebildet ist.

15. Solargenerator-Entfaltsystem mit einer Linearbetätigungsvorrichtung nach Anspruch 14,
**dadurch gekennzeichnet,**
**dass** die Mutter (1) mit einer Tragstruktur (14) der Solargeneratoreinrichtung (8) verbunden ist und die Spindel (3) mit einem äußersten Paneelenelement der Solargeneratoreinrichtung (8) verbunden ist.

16. Solargenerator-Entfaltsystem mit einer Linearbetätigungsvorrichtung nach Anspruch 15,
**dadurch gekennzeichnet,**
**dass** die Spindel (3) in einer ersten Lagerung (13) verkippbar gegen das äußerste Paneelenelement der Solargeneratoreinrichtung (8) gelagert ist und die Mutter (1) in einer zweiten Lagerung (15) verkippbar gegen die Tragstruktur (14) gelagert ist.

## Claims

1. A linear actuator comprising
- a means formed as a nut (1) for converting a rotation movement into a translation movement,
- a drive member (22, 32),
- a spindle (3) co-operating with the nut (1), wherein the nut (1) is rotatably connected to the spindle (3) and wherein the drive member (22, 32) exerts a force on that region of the spindle (3) which co-operates with the nut (1), and
- a resilient member acting as a drive member (22, 32) in the axial direction of the spindle (3) in order to generate a tensile force or compressive force in the axial direction of the spindle (3),
- wherein the nut (1) is operatively connected to the spindle (3) via rolling bodies (4),
- wherein the nut (1) is connected in a rotationally fixed manner to a first locking member (5) which is detachably connectable to a complementary locking member (6) in a rotationally fixed manner, and
- wherein the nut (1) is rotatably mounted in relation to a housing (9),
**characterised in that**
- the spindle (3) and the nut (1) are tiltably mounted in bearings (13, 15).

2. A linear actuator according to claim 1, **characterised in that** the spindle (3) is formed so as to be extensible under prestress and thereby acts as a drive member (22).

3. A linear actuator according to claim 1 or 2, **characterised in that** at least one spring member (32), which applies prestress to the spindle (3), is provided as a drive member (32).

4. A linear actuator according to any one of claims 1 to 3, **characterised in that** the rolling bodies (4) are formed as rollers or balls.

5. A linear actuator according to any one of claims 1 to 4, **characterised in that** the first locking member (5) has a projection or a recess (7) on its surface, and the complementary locking member (6) has a shape complementary to the projection or the recess (7).

6. A spacecraft having a linear actuator according to any one of claims 1 to 5.

7. A spacecraft according to claim 6, **characterised in that** a drive member (2) is connected to the spacecraft, and the spindle (3) is connected in a rotationally fixed manner to releasable, extendable or unfoldable devices (8) of the spacecraft.

8. A spacecraft according to claim 7, **characterised in that** the spindle (3) is connected to a solar generator device (8) or an antenna device.

9. A solar generator deployment system having a linear actuator comprising
- a means formed as a nut (1) for converting a rotation movement into a translation movement,
- a drive member (22, 32),
- a spindle (3) co-operating with the nut (1), wherein the nut (1) is rotatably connected to the spindle (3) and wherein the drive member (22, 32) exerts a force on that region of the spindle (3) which co-operates with the nut (1), and
- a resilient member (22, 32) acting as a drive member (22, 32) in the axial direction of the spindle (3) in order to generate a tensile force or compressive force in the axial direction of the spindle (3),
- wherein the nut (1) is operatively connected to the spindle (3) via rolling bodies (4),
- wherein the nut (1) is connected in a rotationally fixed manner to a first locking member (5) which is detachably connectable to a complementary locking member (6) in a rotationally fixed manner, and
- wherein the nut (1) is rotatably mounted in relation to a housing (9),
**characterised in that**
- the spindle (3) and the nut (1) are tiltably mounted in bearings (13, 15).

10. A solar generator deployment system with a linear actuator according to claim 9, **characterised in that** the spindle (3) is formed so as to be extensible under prestress and thereby acts as a drive member (22).

11. A solar generator deployment system with a linear actuator according to claim 9 or 10, **characterised in that** at least one spring member (32), which applies prestress to the spindle (3), is provided as a drive member (32).

12. A solar generator deployment system with a linear actuator according to any one of claims 9 to 11, **characterised in that** the rolling bodies (4) are formed as rollers or balls.

13. A solar generator deployment system with a linear actuator according to any one of claims 9 to 12, **characterised in that** the first locking member (5) has a projection or a recess (7) on its surface, and the complementary locking member (6) has a shape complementary to the projection or the recess (7).

14. A solar generator deployment system with a linear actuator according to any one of claims 9 to 13, **characterised in that** the linear actuator is formed as part of a hold-down and release system for deployment of a solar generator device (8).

15. A solar generator deployment system with a linear actuator according to claim 14, **characterised in that** the nut (1) is connected to a supporting structure (14) of the solar generator device (8), and the spindle (3) is connected to an outermost panel element of the solar generator device (8).

16. A solar generator deployment system with a linear actuator according to claim 15, **characterised in that** the spindle (3) is mounted in a first bearing (13) so as to be tiltable in relation to the outermost panel element of the solar generator device (8), and the nut (1) is mounted in a second bearing (15) so as to be tiltable in relation to the supporting structure (14).

## Revendications

1. Dispositif d'actionnement linéaire avec
- un moyen conçu comme écrou (1) pour convertir un mouvement de rotation en un mouvement de translation,
- un organe de commande (22, 32),
- une broche (3) agissant conjointement avec l'écrou (1), moyennant quoi l'écrou (1) est relié de façon à pivoter à la broche (3) et moyennant quoi l'organe de commande (22, 32) exerce une force sur la partie de la broche (3) agissant conjointement avec l'écrou (1), et
- un élément élastique agissant comme organe de commande (22, 32) dans le sens axial de la broche (3) pour générer une force de traction ou une force de pression dans le sens axial de la broche (3),
- moyennant quoi l'écrou (1) est relié à la broche (3) via des galets de roulement (4),
- moyennant quoi l'écrou (1) est relié de façon fixe à un premier organe d'arrêt (5), lequel peut être relié de façon amovible et fixe à un organe d'arrêt complémentaire (6), et
- moyennant quoi l'écrou (1) est placé de façon à pivoter par rapport à un logement (9),
**caractérisé en ce que**
- la broche (3) et l'écrou (1) sont placés de façon à s'aligner dans les positions (13, 15).

2. Dispositif d'actionnement linéaire selon la revendication 1, **caractérisé en ce que** la broche (3) est conçue de façon extensible sous une prétension et agit ainsi comme organe de commande (22).

3. Dispositif d'actionnement linéaire selon la revendication 1 ou 2, **caractérisé en ce qu'**au moins un élément à ressort (32) est prévu comme organe de commande (32), lequel exerce une prétension sur la broche (3).

4. Dispositif d'actionnement linéaire selon l'une quelconque des revendications 1 à 3, **caractérisé en ce que** les galets de roulement (4) sont conçus comme galets ou comme billes.

5. Dispositif d'actionnement linéaire selon l'une quelconque des revendications 1 à 4, **caractérisé en ce que** le premier organe d'arrêt (5) comporte une partie saillante ou une cavité (7) sur sa surface et **en ce que** l'organe d'arrêt complémentaire (6) comporte une forme complémentaire pour la partie saillante ou la cavité (7).

6. Véhicule spatial comportant un dispositif d'actionnement linéaire selon l'une quelconque des revendications 1 à 5.

7. Véhicule spatial selon la revendication 6, **caractérisé en ce qu'**un organe de commande (2) est relié au véhicule spatial et **en ce que** la broche (3) est reliée de façon fixe à des dispositifs (8) amovibles, mobiles ou déployables du véhicule spatial.

8. Véhicule spatial selon la revendication 7, **caractérisé en ce que** la broche (3) est reliée à un dispositif de générateur solaire (8) ou à un dispositif d'antenne.

9. Système de déploiement de générateur solaire comportant un dispositif d'actionnement linéaire avec
- un moyen conçu comme écrou (1) pour convertir un mouvement de rotation en un mouvement de translation,
- un organe de commande (22, 32),
- une broche (3) agissant conjointement avec l'écrou (1), moyennant quoi l'écrou (1) est relié de façon à pivoter à la broche (3) et moyennant quoi l'organe de commande (22, 32) exerce une force sur la partie de la broche (3) agissant conjointement avec l'écrou (1), et
- un élément élastique agissant comme organe de commande (22, 32) dans le sens axial de la broche (3) pour générer une force de traction ou une force de pression dans le sens axial de la broche (3),
- moyennant quoi l'écrou (1) est relié à la broche (3) via des galets de roulement (4),
- moyennant quoi l'écrou (1) est relié de façon fixe à un premier organe d'arrêt (5), lequel peut être relié de façon amovible et fixe à un organe d'arrêt complémentaire (6), et
- moyennant quoi l'écrou (1) est placé de façon à pivoter par rapport à un logement (9),
**caractérisé en ce que**
- la broche (3) et l'écrou (1) sont placés de façon à s'aligner dans les positions (13, 15).

10. Système de déploiement de générateur solaire avec un dispositif d'actionnement linéaire selon la revendication 9, **caractérisé en ce que** la broche (3) est conçue de façon extensible sous une prétension et agit ainsi comme organe de commande (22).

11. Système de déploiement de générateur solaire comportant un dispositif d'actionnement linéaire selon la revendication 9 ou 10, **caractérisé en ce qu'**au moins un élément de ressort (32) est prévu comme organe de commande (32), lequel exerce une prétension sur la broche (3).

12. Système de déploiement de générateur solaire comportant un dispositif d'actionnement linéaire selon l'une quelconque des revendications 9 à 11, **caractérisé en ce que** les galets de roulement (4) sont conçus comme galets ou comme billes.

13. Système de déploiement de générateur solaire comportant un dispositif d'actionnement linéaire selon l'une quelconque des revendications 9 à 12, **caractérisé en ce que** le premier organe d'arrêt (5) comporte une partie saillante ou une cavité (7) sur sa surface et **en ce que** l'organe complémentaire (6) comporte une forme complémentaire pour la partie saillante ou la cavité (7).

14. Système de déploiement de générateur solaire comportant un dispositif d'actionnement linéaire selon l'une quelconque des revendications 9 à 13, **caractérisé en ce que** le dispositif d'actionnement linéaire est conçu comme une partie d'un système de retenue ou de séparation pour déployer un dispositif de générateur solaire (8).

15. Système de déploiement de générateur solaire comportant un dispositif d'actionnement linéaire selon la revendication 14, **caractérisé en ce que** l'écrou (1) est relié à une structure de support (14) du dispositif de générateur solaire et **en ce que** la broche (3) est reliée à un élément de lambrissage externe du dispositif de générateur solaire (8).

16. Système de déploiement de générateur solaire comportant un dispositif d'actionnement linéaire selon la revendication 15, **caractérisé en ce que** la broche (3) est placée dans une première position (13) de façon à s'aligner par rapport à l'élément de lambrissage externe du dispositif de générateur solaire (8) et **en ce que** l'écrou (1) est placé dans une seconde position (15) pouvant être alignée par rapport à la structure de support (14).
